# EUROPEAN PATENT APPLICATION

(11) **EP 2 832 666 A1**
(43) Date of publication of application: **04.02.2015**
(21) Application number: 13179106.3
(22) Date of filing: 02.08.2013
(51) Int. Cl.: B65G 5/00, F02C 6/16, F17C 1/00

(54) **Installation for storing compressed air**

(71) Applicant: Park-ID B.V., 2341 CJ Oegstgeest (NL)
(72) Inventor: Mouwen, Franciscus Johannes Hermannus, 2341 CJ Oegstgeest (NL)
(74) Representative: De Vries & Metman

(57) **Abstract**

The invention relates to an installation for storage of a compressed gas, such as air, comprising a cavity (10) for containing the compressed gas, wherein the cavity (10) comprises an excavated blind hole in rock. Embodiments of the installation comprise a section (10) with a larger diameter, a pressure plug (15) or a flexible impermeable lining (13).

## Description

The invention relates to an installation for storing compressed gas, e.g. air, at high pressures, typically at pressures between about 3 and about 25 MPa and temperatures of from about -30° and to about +90.

For the storage of compressed gas large containment forces must be activated. Present technologies either activate the material properties of the shell of a man-made tank (i.e. steel tanks, filament wound composite or other material tanks), or geological material properties of a man-made or naturally occurring underground volume (aquifer, abandoned gas field, salt cavern, rock cavern). The purpose of the present invention is to provide in an economical alternative for the present technologies, preferably independent of geological or geographical constraints.

The installation according to the present invention comprises a cavity for containing the compressed gas, wherein the cavity comprises an excavated blind hole, i.e. a hole excavated from ground level, without the need for additional access tunnels, in rock.

In an embodiment, the blind hole was obtained by shaft-sinking, e.g. shaft boring, raise drilling or drill and blast, preferably obtained by raise drilling a shaft bored pilot hole.

Another embodiment contains a compressed gas and the containment forces are borne by and/or transferred to the rock.

In an embodiment, the cavity comprises a lower section for storage of a compressed gas and an upper section, e.g. an access shaft, and the lower section has a larger diameter than the upper section, preferably at least 40%, preferably at least 70%, preferably at least 100%, preferably at least 150%, preferably at least 200% larger, preferably at least 300% larger.

Another embodiment further comprises a flexible and preferably impermeable lining, which, once inflated with compressed gas, abuts the wall of the cavity. E.g., the lining is configured as balloon inflated in the rock cavity. The lining provides sufficient or complete air-tightness and pressure load transfer to the rock mass. In a refinement, the lining is adjacent, preferably directly adjacent, to but not fixed to the rock surface. It is preferably exchangeable to facilitate inspection and replacement procedures and to allow for groundwater to enter the cavity into a dewatering bilge for certain system states and modes.

Another embodiment comprises, above the cavity, an undercut and a pressure plug placed or formed in the undercut and/or a column extending from the bottom to the top of the wider section. The plug is preferably wedge-shaped to facilitate transfer of forces to the rock above. A central column extending through the storage volume, mitigates the need for a vertical pressure plug, houses auxiliary support systems and functions and/or facilitates maintenance of a flexible lining element.

Another embodiment comprises a drilling machine in turn comprising a drilling head, wherein the drilling head comprises one or more cutters and a linkage configuration to extend the one or more cutters in the outer drilling head perimeter to larger cutting diameters.

Another embodiment comprises a drilling machine, wherein the drilling machine incorporates a rotating drilling head with rock cutting elements, wherein diameter expansion of at least two cutting elements is achieved by actuation of a single actuator, preferably by rotating the actuator about or translating the actuator along the central machine axis, e.g. a drill string.

Another embodiment comprises a drilling machine, wherein the drilling head is configured such that the cutting forces in radial direction are opposite and absorbed in self-reacting manner.

The invention further relates to a method of building an installation for storage of a compressed gas, such as air, comprising the step of excavating from ground level downwards a blind hole in rock and comprising a cavity for containing the compressed gas.

An embodiment comprises the steps of excavating a blind shaft and reaming, e.g. by means of raise drilling or by drill and blast, a section of the shaft to a wider diameter in one step or a plurality of incremental steps, preferably using a diameter expandable drilling head in a plurality of incremental steps, to a pre-determined diameter and preferably comprising the steps of reaming domes, e.g. hemispherical domes, at the top and/or bottom of the wider section.

In another embodiment, the shaft drilling and the reaming of a section of the shaft are performed by means of the same drill.

Another embodiment comprises the steps of reaming, above the cavity for containing the compressed gas, an undercut and installing in the undercut a pressure plug, e.g. by placing a pre-fabricated plug or by forming a plug in situ, and/or the step of placing in the cavity a column extending from the bottom to the top of the wider section.

The plug preferably houses support systems and conduits and/or is bonded with the rock-mass in form-closed manner by in-situ casting of a torus shaped wedge volume, which is in part formed by a wedge shaped recess excavated into the rock.

In another embodiment, during reaming the excavated material falls in a bilge, e.g. at or in de bottom of the section being reamed, and is transported from there to ground level, e.g. by means of a pump located in the bilge or other methods such as reverse circulation.

In another embodiment, a flexible lining is placed in at least the wider section and the lining is inflated and thus urged to the wall of the wider section.

A rock cavity for storing compressed gas, such as air, under pressure must fulfill a number of specific criteria in respect to the pressure absorbing capacity. Amongst other things, the rock cover above the storage space and the pressure plug inside the access shaft or tunnel must be capable preventing up-lift or elevation.

An important part of a lined compressed gas storage space is a lining element, which comprises an impermeable lining layer and may also include reinforcement or reinforcement layers, and in some embodiments a sliding transition layer adjacent to the surrounding rock.

The rock deformations in the surrounding rock should be limited when subjected to the operational pressure, ideally such that they do not result in the elongation and fatigue capacity of the impermeable lining being exceeded over the course of many pressure cycles throughout the lifetime of the cavern. In addition, it is preferably possible to drain groundwater from the surrounding rock.

During regular states and modes of operation the cavern pressure typically cycles between about 3 and about 25 MPa on a daily basis supported by the rock wall. However, the rock wall shall preferably also be stable under atmospheric states and modes of operation such as construction or maintenance. Therefore, and although it is aimed for to limit the amount of (temporary) support measures of the rock wall to a minimum, possibly nill, rock anchors and shotcrete may be installed and applied in quantity decided upon in-situ during construction, in order to secure rock blocks or loose irregularities in the rock from falling from the rock face.

Several embodiments of an installation according to the present invention will now be described in more detail with reference to accompanying drawings, in which:

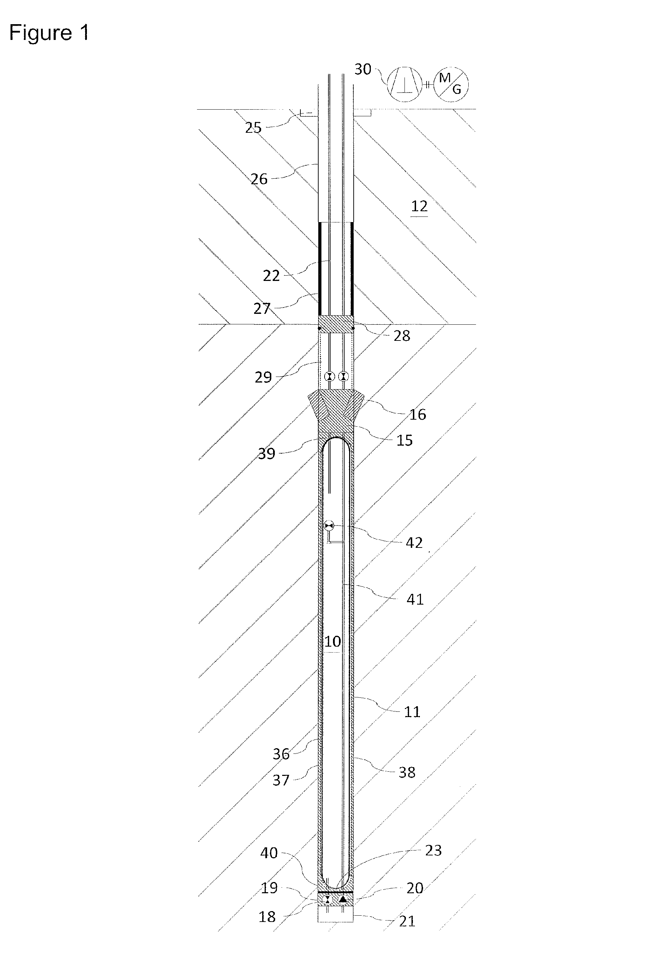

**FIG 1** is a schematic view of an installation for storing of compressed air or gas in a lined underground storage space, which is constructed by means of a shaft-boring machine. In this embodiment, the storage space is constructed by means of a shaft with uniform diameter. The vertical loads are all transferred into the rock by a pressure plug slightly larger than the shaft diameter, and forms a form-closed transfer mechanism with the rock mass. Pressure forces are transferred by a traditional lining configuration consisting of a thin steel impermeable lining, a sliding intermediate layer (for example bitumen) and a crack controlling concrete transfer layer adjacent to the rock.

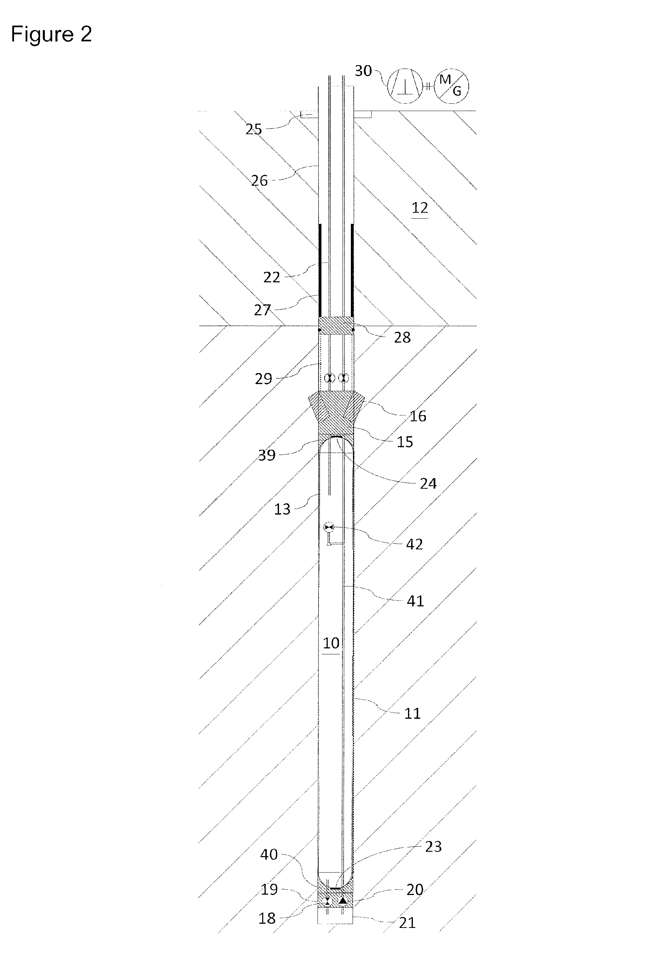

**FIG 2** is a schematic view of an installation for storing of compressed air or gas in a lined underground storage space, which is constructed by means of a shaft-boring machine. In this embodiment, the storage space is constructed by means of a shaft with uniform diameter. The vertical loads are all transferred into the rock by a pressure plug slightly larger than the shaft diameter, and forms a form-closed transfer mechanism with the rock mass. Pressure forces are transferred by an impermeable flexible lining element directly adjacent to the rock.

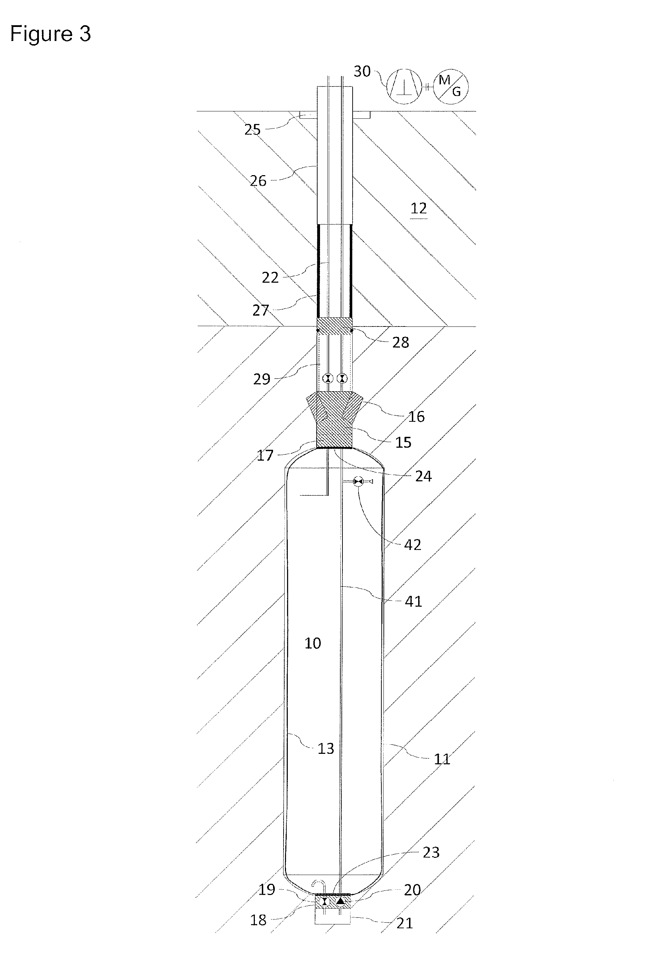

**FIG 3** is a schematic view of an installation for storing of compressed air or gas in a lined underground storage space, which is constructed by means of a shaft-boring machine. In this embodiment, the storage space is constructed by means of a shaft with variable diameter, thus minimizing the access shaft dimensions and maximizing the pressure shaft volume. The vertical loads are all transferred into the rock by a pressure plug slightly larger than the access shaft diameter, and forms a form-closed transfer mechanism with the rock mass. Pressure forces are transferred by an impermeable flexible lining element directly into the rock.

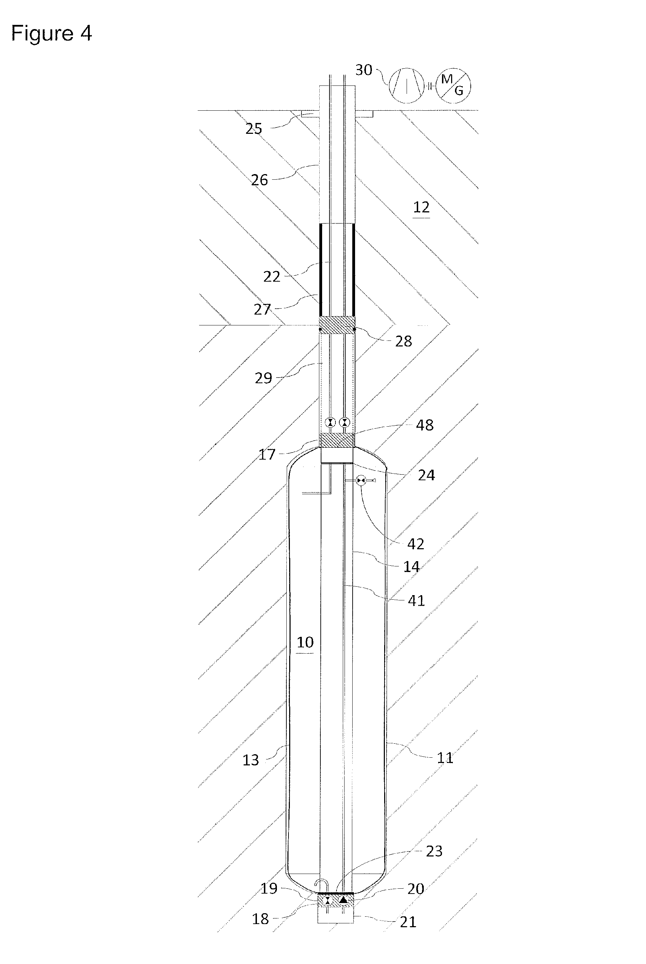

**FIG 4** is a schematic view of an installation for storing of compressed air or gas in a lined underground storage space, which is constructed by means of a shaft-boring machine. In this embodiment, the storage space is constructed by means of a shaft with variable diameter. In this embodiment, a central column throughout the storage volume of similar or identical diameter as the access shaft removes the need for a pressure plug altogether. The vertical loads are all directly transferred into the rock by the shoulders of the bottle shaped pressure volume. In this way, it is expected that the depth requirements (and costs) for the access shaft be reduced. Support functions and systems such as (maintenance) access, monitoring, dewatering, and circulation can be allocated to the central shaft structure as well. Pressure forces are transferred by an impermeable flexible lining element directly adjacent to the rock.

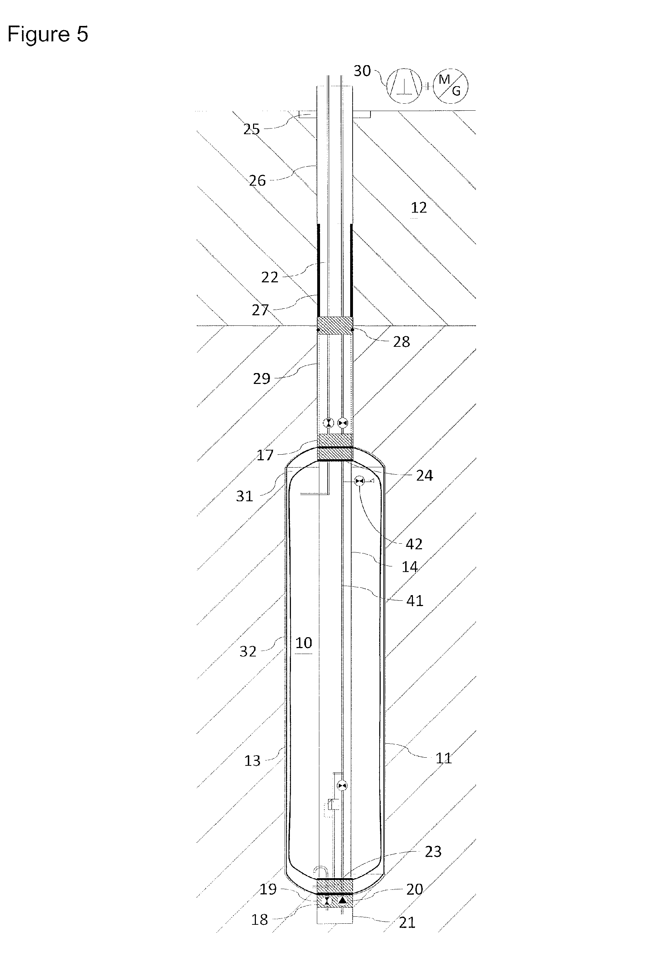

**FIG 5** is a schematic view of an installation for storing of compressed air or gas in a lined underground storage space, which is constructed by means of a shaft-boring machine. In this embodiment, the storage space is constructed by means of a shaft with variable diameter. In this embodiment, a central column throughout the storage volume of similar diameter as the access shaft removes the need for a pressure plug altogether. The vertical loads are all directly transferred into the rock by the shoulders of the bottle shaped pressure volume. Support functions and systems such as (maintenance) access, monitoring, dewatering, and circulation can be allocated to the central shaft structure as well. Pressure forces are transferred by an air-impermeable flexible lining element immersed in a pressure controlled water volume, via a watertight layer directly adjacent to the rock.

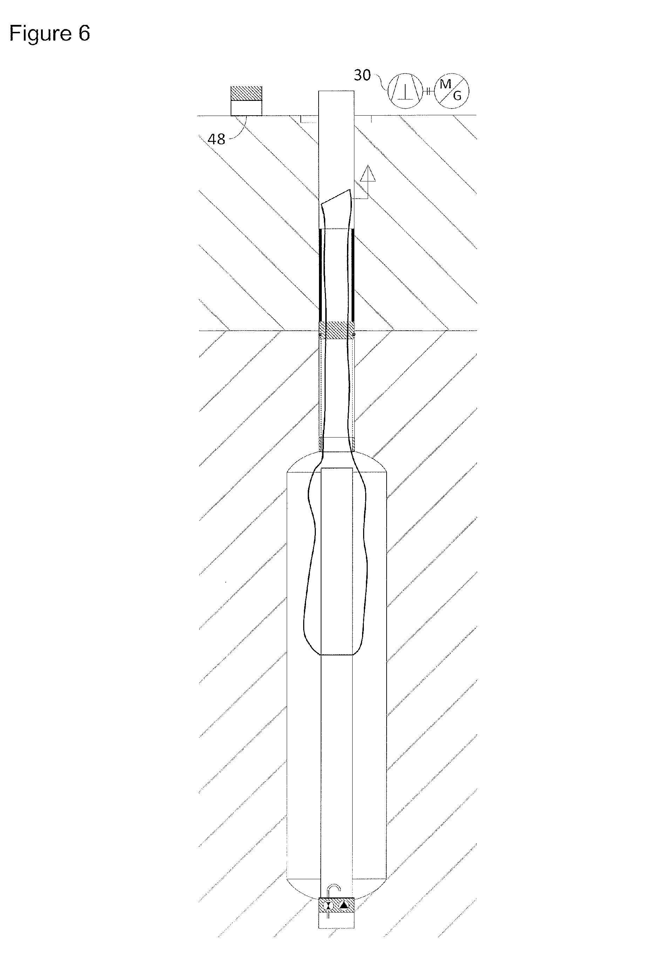

**FIG 6** shows a schematic representation of one step in a maintenance replacement procedure of the whole impermeable flexible lining element as depicted in the embodiments of FIG 4 and 5.

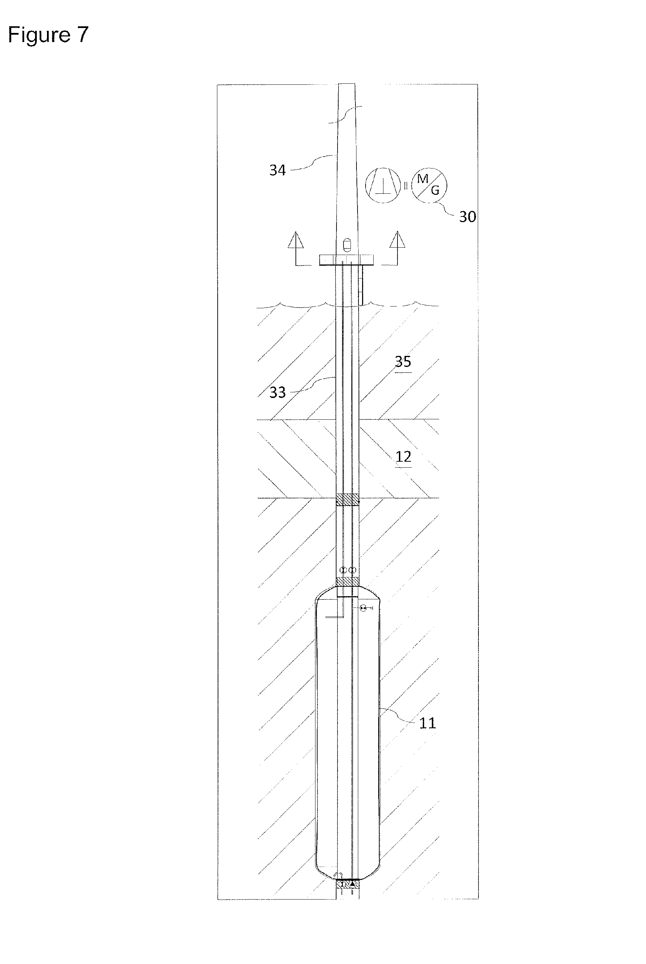

**FIG 7** is a schematic representation of an installation for storing of compressed air or gas in a lined underground storage space, which is constructed by means of a shaft-boring machine of variable diameter, and which is integrated with the foundation structure of a monopile of an onshore, nearshore or offshore wind turbine. In this embodiment it is possible to integrate the power generating functions of the wind turbine, the power functions of the compressed air storage system and the underground energy storage function of the compressed air energy storage system.

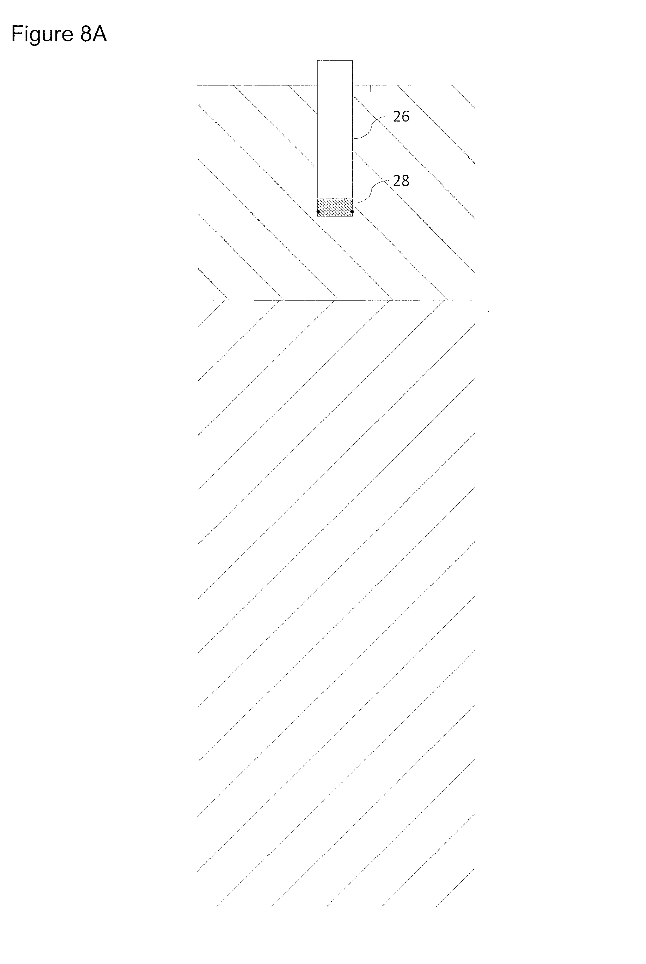

**FIG 8A** to **FIG 8M** show a schematic representation of the main steps of the construction of embodiment as represented by FIG 3, 4 and 5. Excavation of the various volumes and subsequent installation of the key system elements are illustrated.

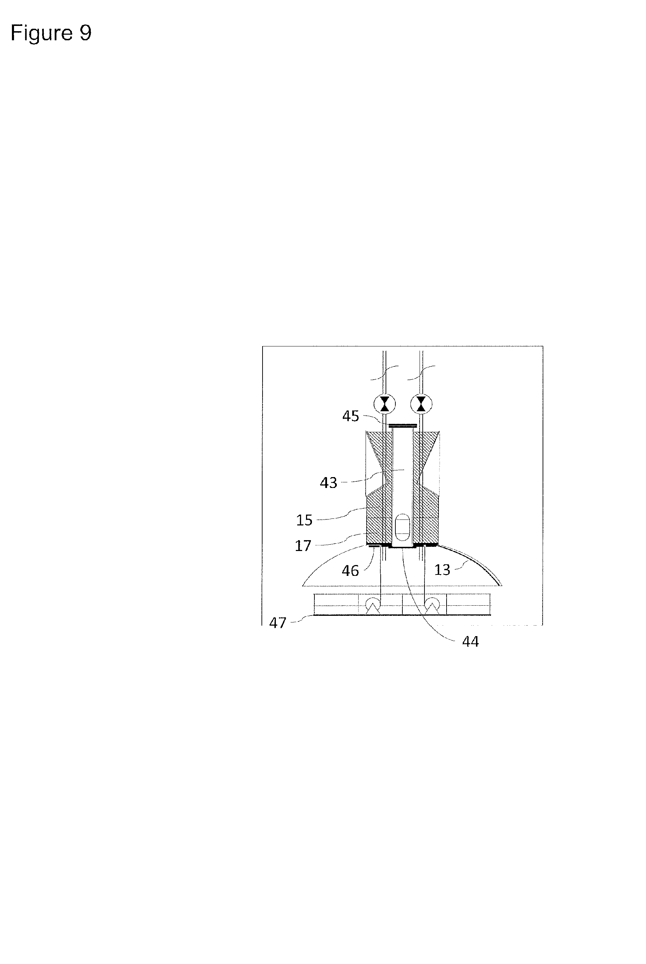

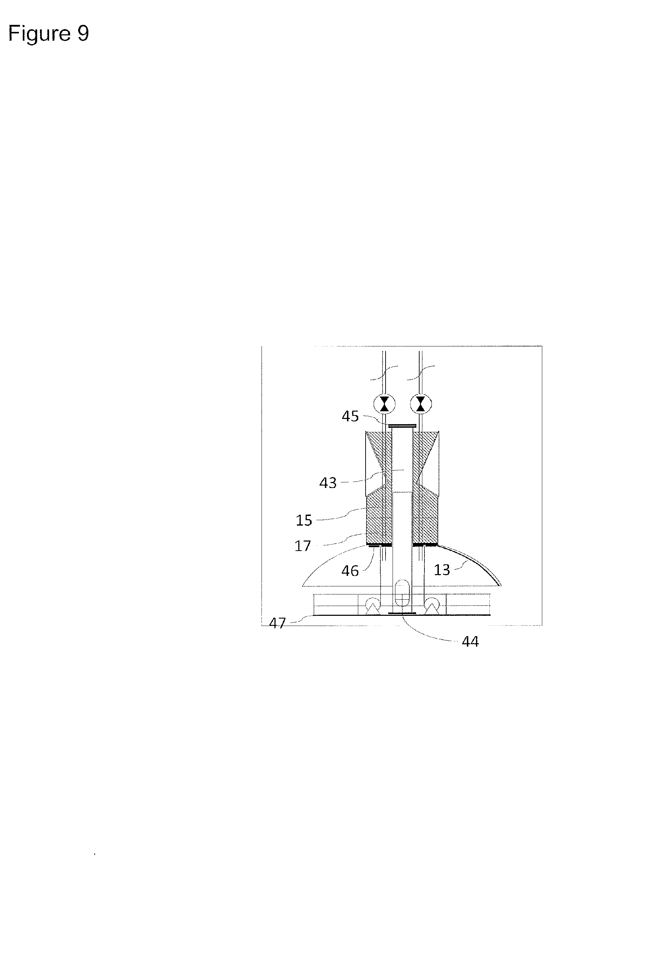

**FIG 9** shows a detail of a prefabricated pressure plug, which already incorporates cables and pipelines, maintenance access systems and flexible lining connection systems prior to installation in the shaft. Also, the working principle of an optional maintenance access system is depicted in self-sealing closed mode, as well as deployed access mode with an optional working platform, which can be lowered over the depth of the pressure volume (bottom). This working platform remains secured in the pressure volume during normal operations.

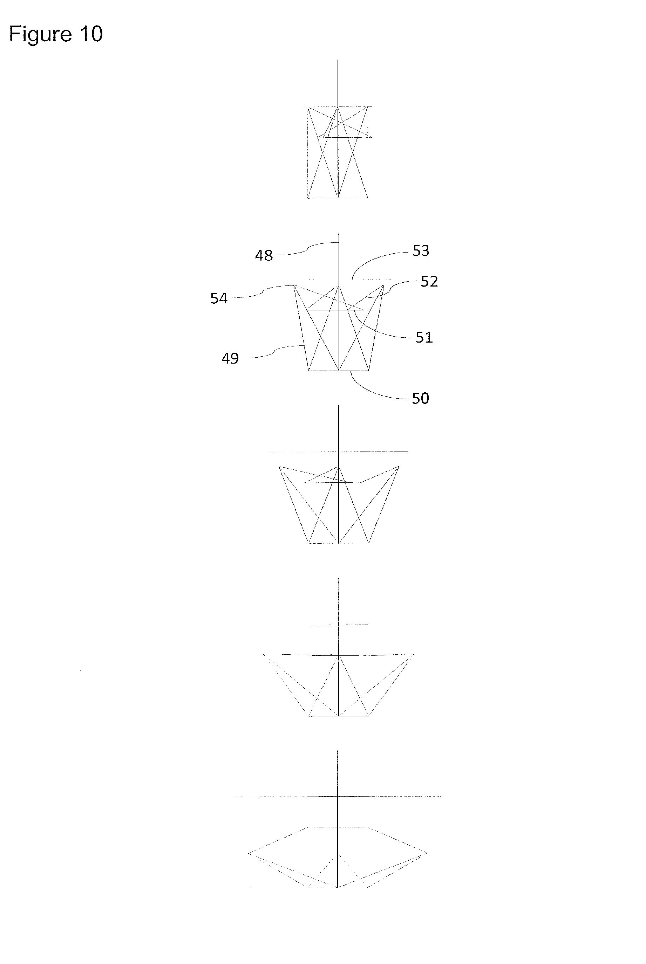

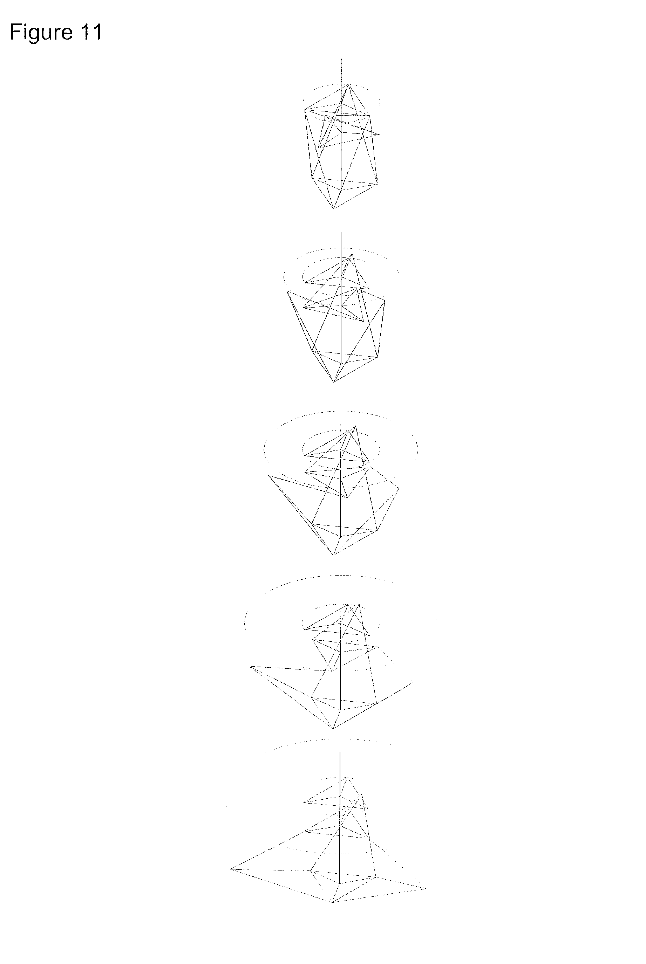

**FIG 10** and **FIG 11** show line-diagrams of a novel drilling head with variable diameter.

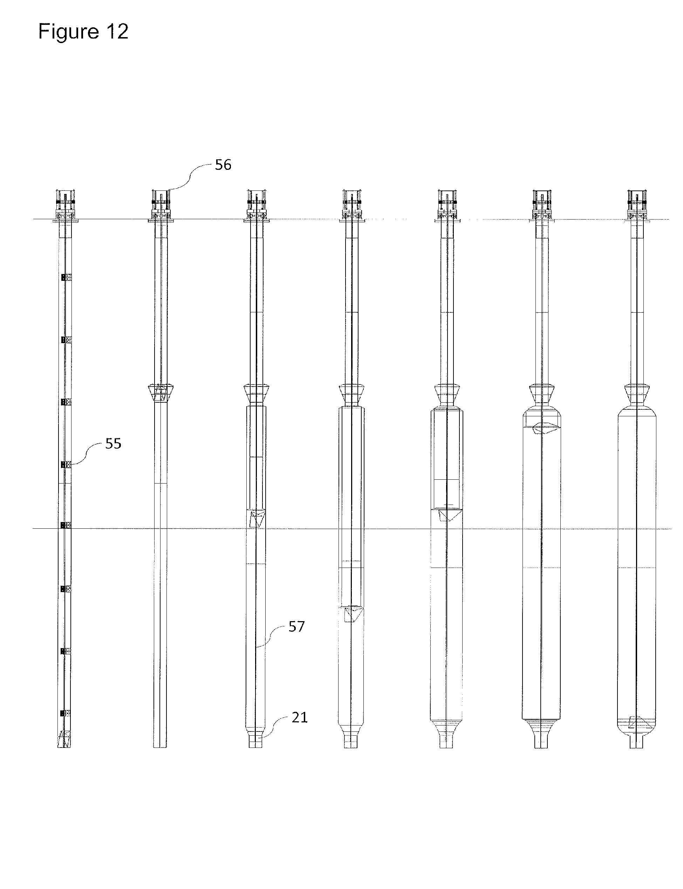

**FIG 12** illustrates a construction sequence using the novel drilling head with variable diameter.

US 6,368,018 B2 discloses a technique for lining a gas storage rock cavity. Inside the rock wall of the storage space, there is a concrete layer for supporting an inner impermeable lining layer. The concrete layer has a crack distribution control reinforcement layer closer to the impermeable lining layer than to the rock wall in order to divide large cracks over a larger area of the impermeable lining layer. Also according to this disclosure, there is provided between the impermeable lining layer and the concrete layer a non-binding sliding layer to facilitate relative movements between the impermeable lining layer and the concrete layer. The system also incorporates a method in operating a cavern for gas, which is disclosed in US 6,374,844. These techniques have been implemented in one known natural gas storage project in Sweden, which is marketed as the Lined Rock Cavern (LRC) technology.

The known embodiments of rock cavity storage spaces for storing pressurized gas have various technical and economical drawbacks. Amongst other things, these are related to the use of traditional materials such as steel and concrete for the lining system, which are placed and cast in-situ. Also, the use of drill and blast methods during the construction phase negatively affects the integrity (additional cracks) and surface quality (roughness) of the supporting rock, and requires extensive access tunnels during the construction phase. Publications of LRC for example describe the construction phase as most critical due to safety, economics and (atmospheric) rock stability.

Also, known embodiments are neither accessible nor maintainable. The technical requirements for the lining resulting from that condition are also expected to negatively affect economics. Also, it is not possible to introduce updated lining technology over the lifetime. Future deployment options in locations relevant for (bulk) electricity storage are critical for marketability of the electricity storage technology. However, the drill and blast methods of the prior art are not practically feasible for example in nearshore or offshore locations adjacent to offshore wind sites, which excludes that important market. One object of the present invention therefore is to provide a gas storage installation, in which these and other drawbacks are eliminated or considerably reduced. The main technical and economical drivers of the current invention are as follows.

Firstly, the use of boring methods that are preferably inaccessible and pressurized during construction obviates or reduces the need for access tunnels and temporary safety and stability measures. This is expected to improve economics and applicability compared to prior art methods, especially for smaller storage volumes and for difficult (offshore) or environmentally sensitive locations.

Secondly, the use variable diameter shaft boring methods shall increase the ratio of the pressure shaft diameter and the access shaft diameter. Machine technology capable of reaming, underreaming or undercutting up to a ratio of 1.2 over short lengths for piling applications is known (for example for rock socket piling). Boring methods for very large under-reaming ratios beyond 1.2 up to 2 or even 3 and beyond as depicted in FIG 3, 4 and 5 are not known, and are a subject of the present invention.

Thirdly, the depth of the pressure shaft shall be increased, using shaft-boring methods capable of boring to large depths of between about 100m and about 500m in light to hard rock geologies.

Fourthly, the depth of the access shaft shall be decreased.

Fifthly, the ratio of pressure shaft volume and the pressure shaft lining surface area shall be increased. For this, the principle of the boring methods of the current invention shall allow for a future enlargement of the diameter.

Sixthly, the use of lining material, and the allocation of functional requirements to the lining system shall be reduced. Current invention makes use of the smooth surface of a storage volume created by a shaft boring machine, which forms a relatively smooth and defined basis of support for a flexible impermeable lining system, and is an improvement over the prior art. Another improvement is, that the lining system is prefabricated under controlled manufacturing conditions, which allows for stringent quality control and manufacturing methods that are not per-se possible in-situ underground, and allow for optimized material consumption, as requirements for the construction or installation phase of the lining system are reduced or even excluded. Also, the impermeable lining system is not fixed to the rock surface. Under normal operational cycling (which will represent the vast majority of the lifetime of the installation), the impermeable flexible lining is closely bonded with the rock surface by the pressure inside the cavity, which seals against the ingress of ground water. If pressure is reduced below the in-situ ground water pressure, water will be allowed to flow between the rock wall and the lining system to the dewatering system. In this way, the function of dewatering is not allocated to the lining system.

These and other objects of the invention are achieved by storage installation in various embodiments as defined in the claims and described by way of examples herein below.

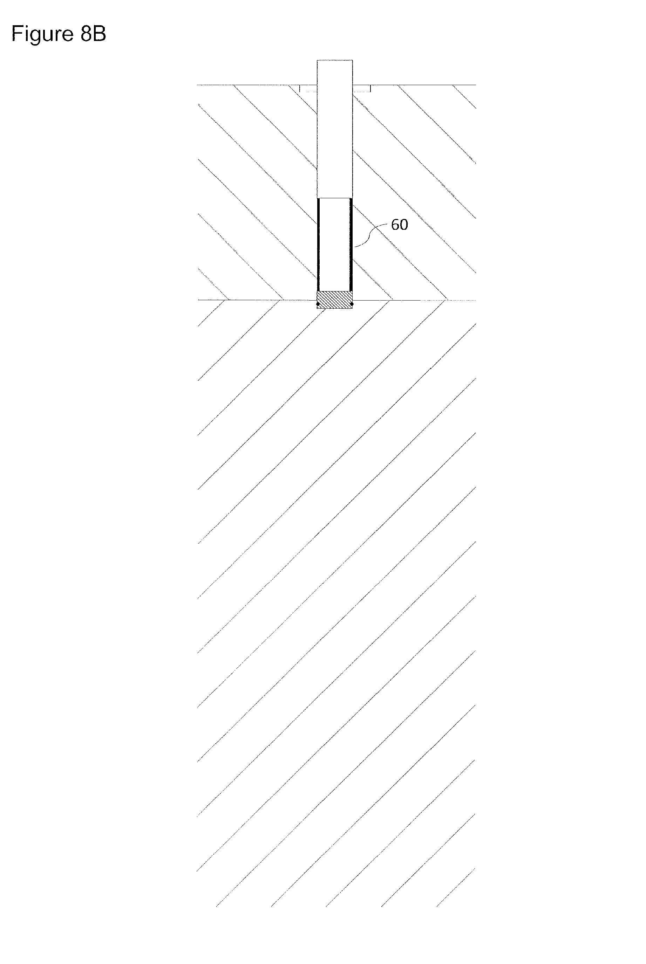

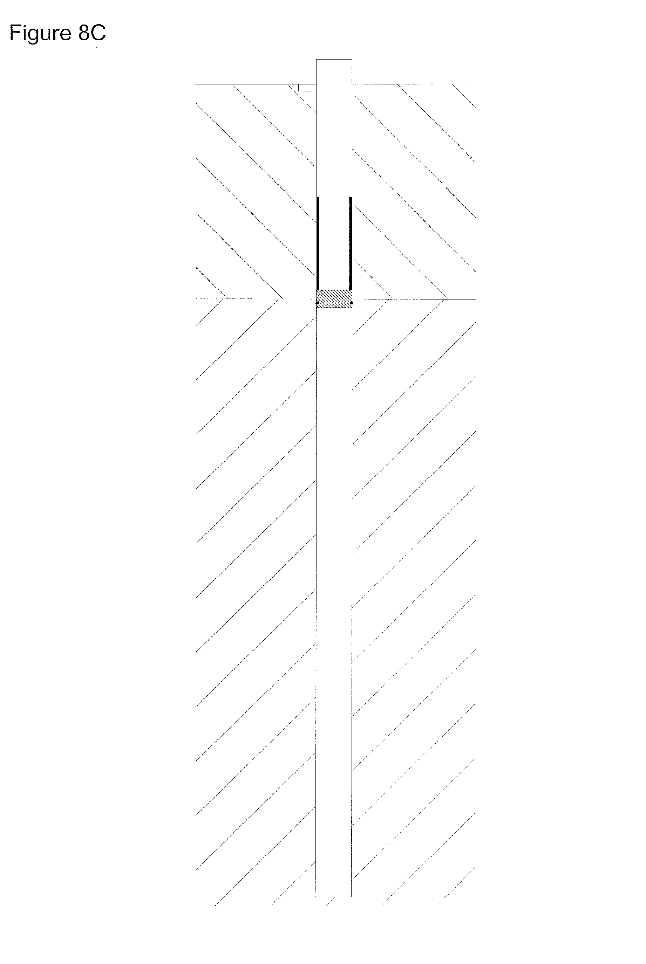

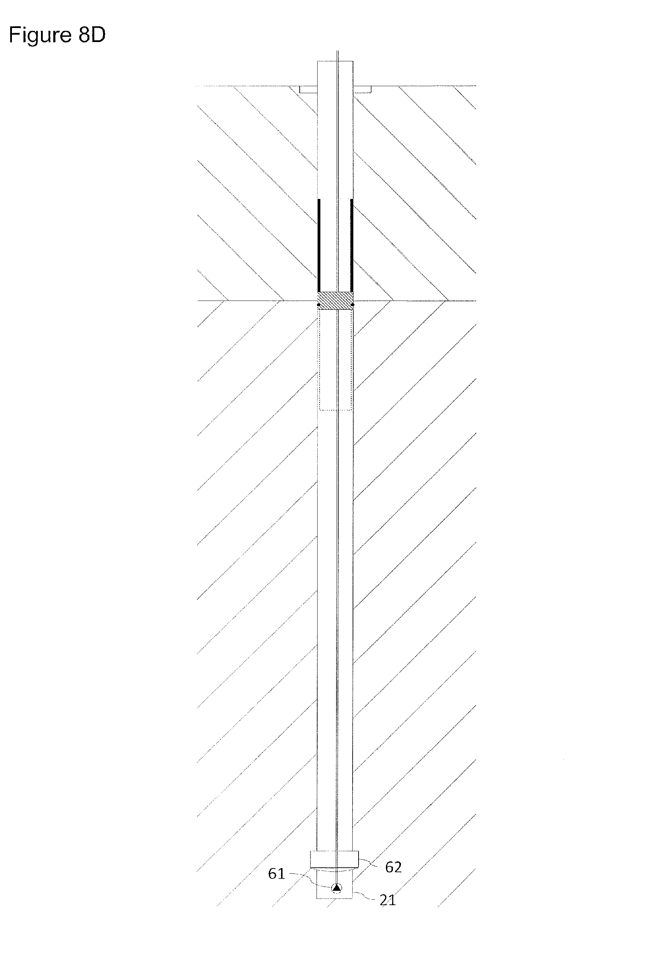

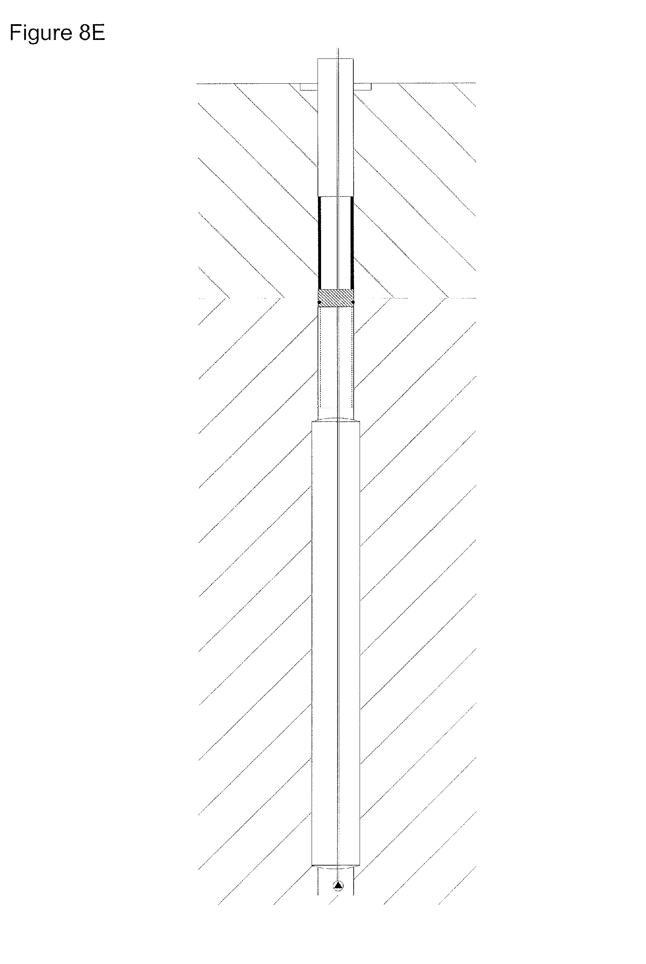

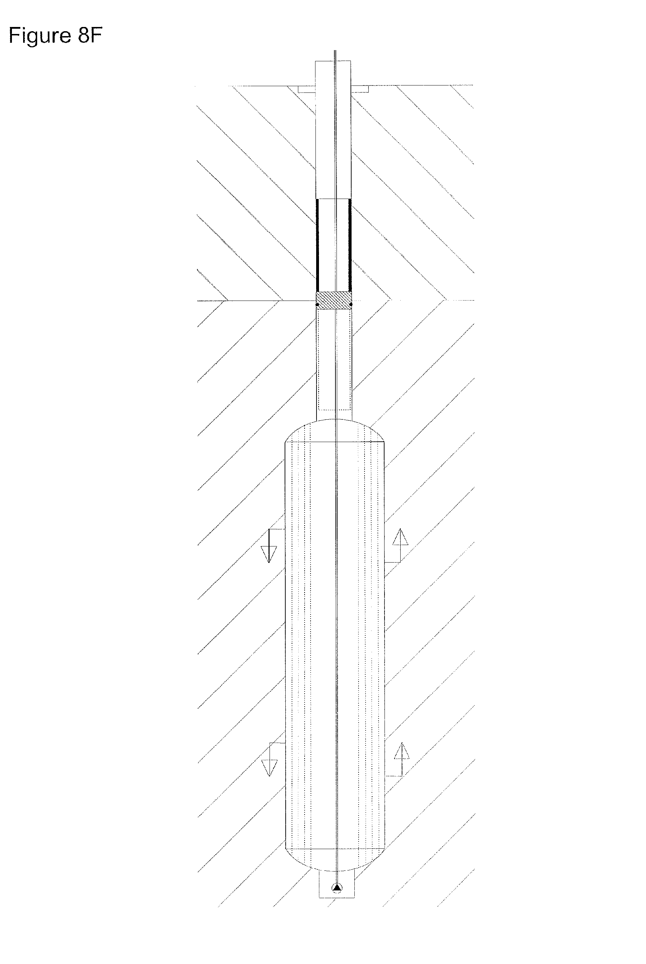

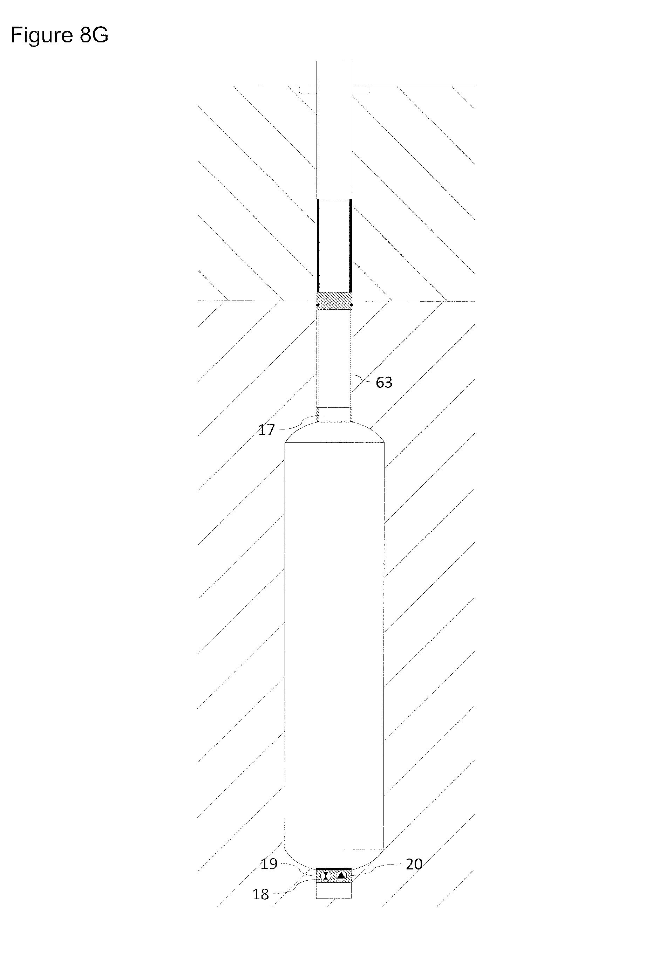

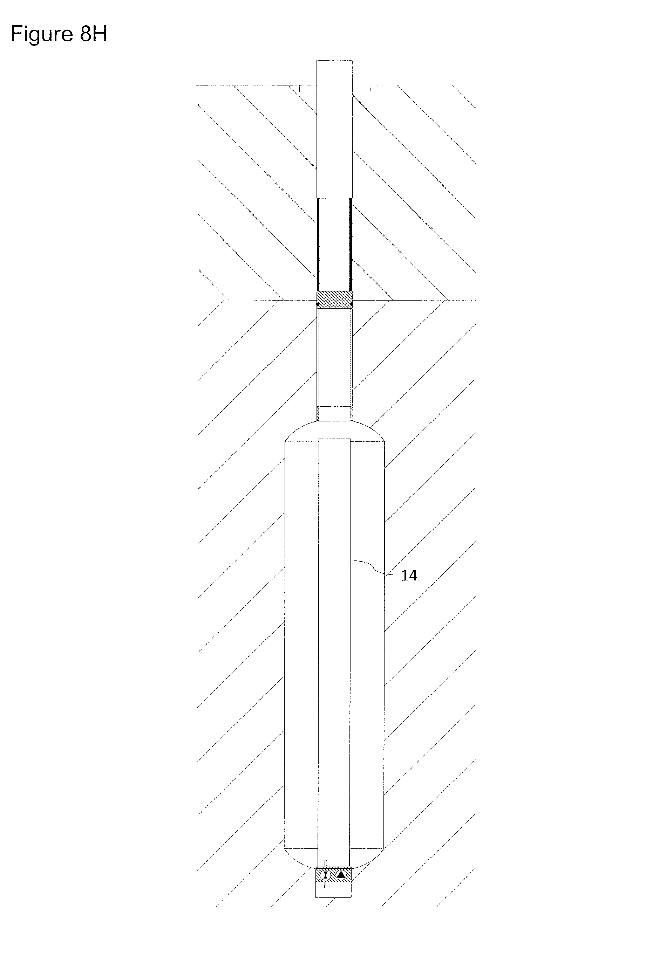

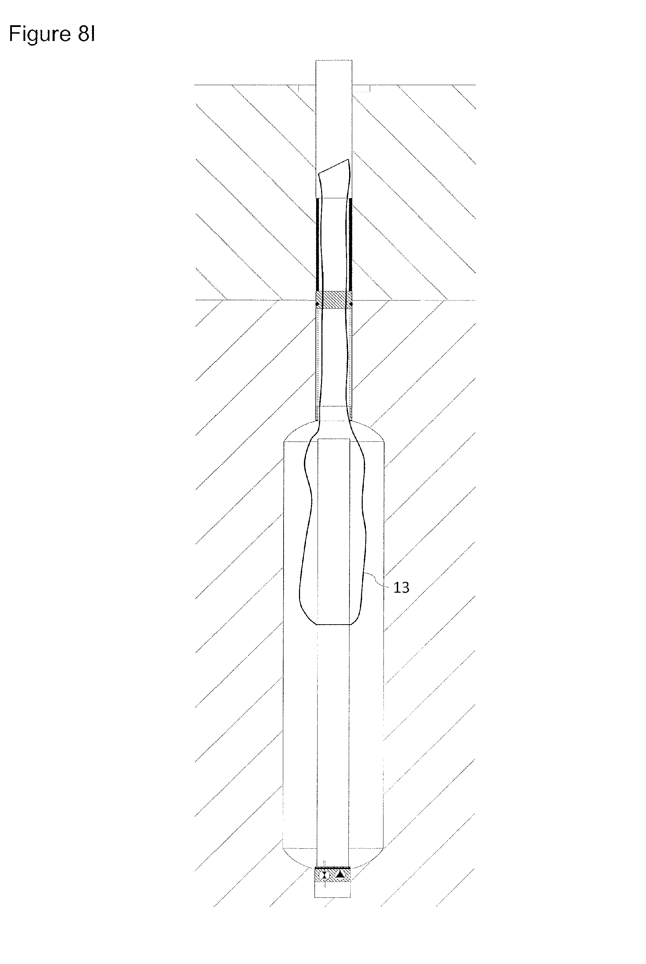

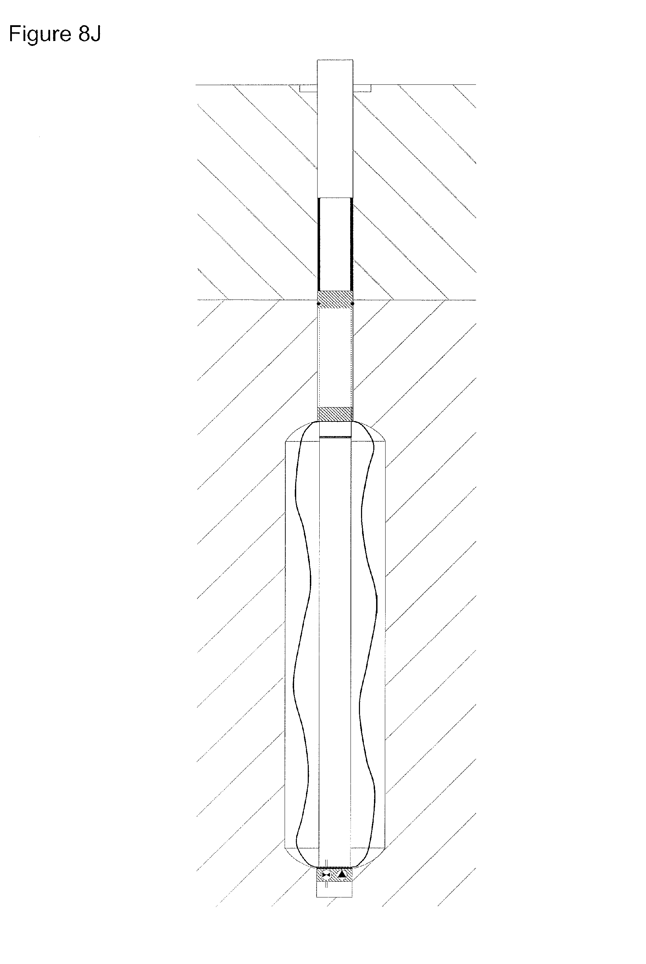

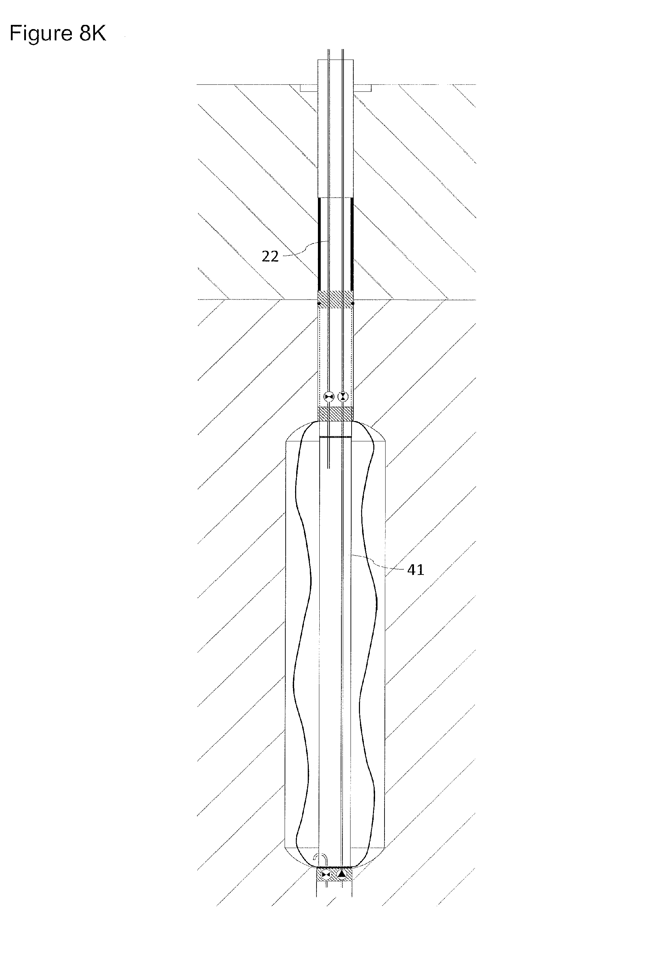

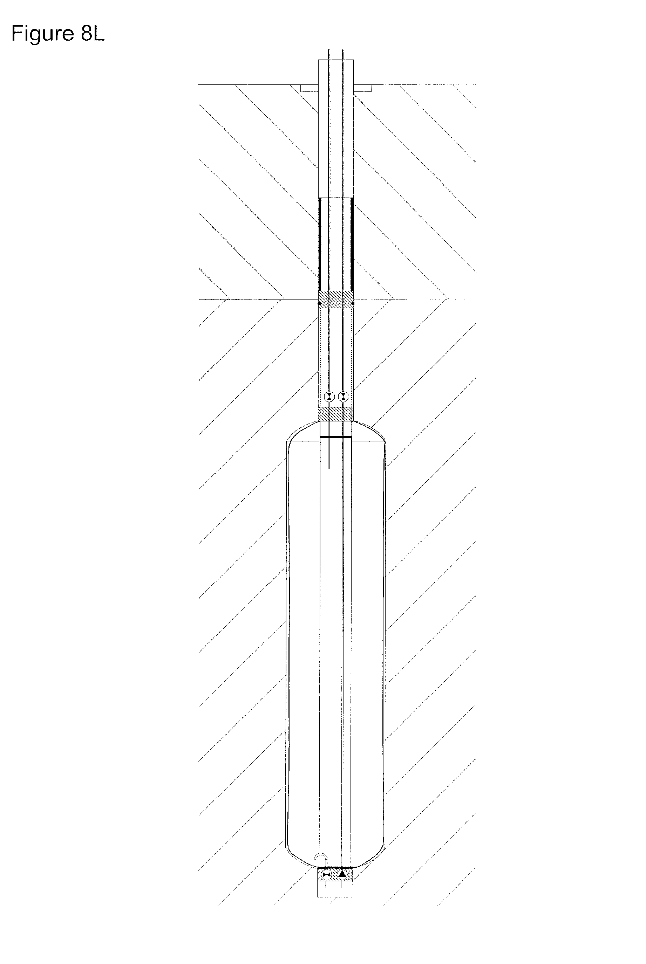

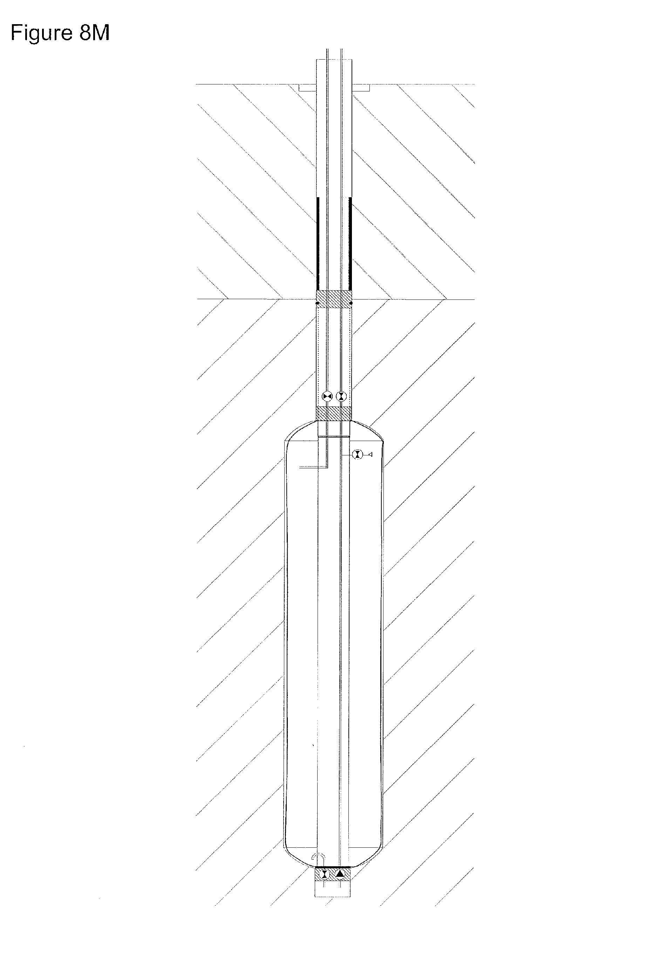

The embodiments can be deployed as single systems as well as multiple parallel sub-systems in proximity of each other that are joined to form a single integrated system. FIG 1 to FIG 5 show schematically various embodiments of an installation for storing of compressed gas in an underground rock cavity. The installation comprises a storage space or rock cavity **10** with a rock wall **11.** Certain locations may include layers of overburden **12** of different geotechnical parameters as the rock bed, but which shall be crossed and supported by the access shaft structure. The impermeable lining **13** is preferably highly flexible and not fixed to the rock surface. It comprises of bonded layers of impermeable material with high elasticity, as well as layers or woven components of high-strength materials such as Aramid e.g. Kevlar that are able to bridge gaps and irregularities in the rock face that occur naturally or as a result of deformations under the large pressure loads. Risk of leakage and control of rupture can be reduced or completely eliminated by integrated (woven) rip-stop elements at a predefined grid size. The lining system is configured in such a way that the whole element can be manufactured and tested in a controlled manufacturing environment, removed for maintenance and inspection aboveground, exchanged or even replaced by an updated lining technology or system. A pre-fabricated pressure plug **15** incorporates all necessary support systems such as pipes, cables and access systems and preferably also rock drilling connections. After it is lowered into the access shaft and positioned, wedge element **16** is installed in-situ by installing reinforcement and casting concrete to establish the form-closed integration with the surrounding load-bearing rock mass. In certain embodiments, the invention incorporates a central column **14,** which replaces the pressure plug, and allows for the allocation of functions such as dewatering and water circulation and maintenance access systems. This central shaft will only be subjected to compression and can e.g. be made of an impermeable geotextile or concrete shell filled with sand or other material under atmospheric conditions. The lining system is fixed to the cavern structure by a connection system **23** and **24** which can be bolted flanges supported by a sealed flange seat and transition piece **17** respectively **18.** The connection systems are prefabricated and include necessary pipelines, cables and connections. The bottom connection piece also includes the pressure shaft dewatering system **19** and a water pumping system **20** which are connected to a bilge volume **21** underneath the pressure shaft, where water from both the pressure shaft and the surrounding rock is collected. A compressor and expander system **30** is connected to the pressure shaft by air connection pipeline with valve system **22.** A stable concrete base-plate **25** forms the interface with the surface. If necessary, a pile **26** of steel or other material is used for the top section of the access shaft to stabilize any overburden, and to form a stable basis of the drilling method. The other section of the access shaft up to the rock bed can be lined by traditional concrete segmented lining or other lining method **27** taking into account that a large cross-section of the access shaft can be backfilled with sand or other bulk material for stability and cost reasons. A prefabricated transition piece **28** is sunk with the shaft drilling, and forms a defined and fixed support for the lining element in the overburden and the access shaft in rock. It also performs a sealing function against groundwater ingress from the overburden and rock into the access shaft. The section of the access shaft in rock is secured by optional rock anchors and shotcrete layer **29,** which is decided upon in-situ, also taking into account that a large cross-section of the access shaft can be backfilled with sand or other bulk material. In the embodiment of FIG 5, a watertight lining **32** directly adjacent to the rock surface is installed in addition to the flexible impermeable lining. A defined volume between the watertight layer and airtight flexible liner is filled with water or other fluid **31,** of which the pressure is controlled and the volume is compensated. Objective of this is, to relieve the airtight layer from interactions with rock surface deformations. Also, this embodiment allows allocating requirements of insulation to this intermediate layer if required. In the embodiment of FIG 7, the storage installation is integrated with the foundation structure of a monopile **33** of an onshore, nearshore or offshore wind turbine **34.** It is expected that this embodiment is an attractive option for installations in water **35** of shallow to intermediate depth. The embodiment of FIG 1 comprises a thin impermeable steel liner **38,** a transition layer **37** and a concrete layer **36** with crack controlling reinforcement. In both embodiments FIG 1 and FIG 2, pressure plug and transition piece are supplemented with a hemispherical shape **39** respectively **40.** A dewatering pipeline with valve system **41** discharges water collected in the bilge to the surface. With an optional recirculation valve system **42,** the dewatering system and bilge can be used to spray water in the top section of the pressure shaft in order to control thermodynamic effects. In the prefabricated top-plug **15** or central column **14,** an optional maintenance access system **43** can be integrated. In maintenance mode, a telescopic access tube **44** (FIG 9) is lowered to provide personnel access to the pressure shaft. In operational mode, the access tube seals the access system by pressing against plate **46** with the inside pressure, and is redundantly secured by bolted flange **45.** Ring **46** connects the flexible impermeable liner to the transition piece. Platform **47,** which always remains inside the pressure shaft can be lowered throughout the pressure shaft to provide maintenance personnel access. FIG 6 illustrates the option of removing the flexible impermeable liner for maintenance inspection or replacement. Firstly, all pipelines, pumps and fittings for air and water in the access shaft are removed. The top and bottom flange connections of the flexible impermeable lining **13** are disconnected from the transitions pieces **17** and **18.** Part **47** consisting of a top-section of the central column **14** and the inside of the transition piece **17** is removed. From this point, it is in principle possible to remove the flexible impermeable lining from the pressure shaft, through the access shaft to the surface. A folding sequence is needed to fit the flexible lining inside the access shaft during this operation. A construction sequence for the embodiments with variable diameters for access shaft and pressure shaft is described hereafter. In FIG 8A a steel pile **26** together with transition piece **28** is lowered into the overburden using vibration and/or excavation tools and methods. In FIG 8B, the access shaft is bored to the rock interface. The transition piece is lowered and put into position. If necessary, the rock surface is reinforced with rock anchors and shotcrete **60** decided upon in-situ. In FIG 8C, the shaft is bored in rock until the required depth. In FIG 8D, a discharge dredge pump or reverse circulation installation **61** is installed in the bilge and a first overcut **62** is made at the position of the bottom of the pressure shaft. In FIG 8E, the pressure shaft is reamed upwards over the length of the pressure shaft. Excavated material falls down into the bilge and is pumped from there. FIG 8F shows subsequent gradual reaming strokes until the required pressure shaft diameter and shape is reached. In FIG 8G, the shaft structure is cleaned and emptied. Where necessary, the rock surface is smoothened and secured with rock anchors and shotcrete **63.** Seats for prefabricated components are prepared. Top and bottom transition pieces **17** and **18** with pre-installed dewatering system **19** and **20** are lowered into the shaft, positioned and secured. In FIG 8H, the central column **14** is installed. In FIG 8I, the flexible impermeable lining **13** is lowered into the pressure shaft. In FIG 8J, the flexible impermeable lining is secured to the top and bottom flanges of the respective transition pieces. In FIG 8K, the dewatering **41** and air systems **22** are completed. In FIG 8L, the flexible impermeable lining is inflated until it is smoothly adjacent with the rock surface. In FIG 8M, all remaining auxiliary systems are installed and the system is tested and commissioned throughout all systems states and modes.

Known techniques for shaft sinking include drill and blast, rotary drilling, shaft boring, raise drilling and combinations thereof. Key differentiators are the methods of excavation (e.g. drill and blast, cutting, crushing), the methods of removing the excavated material (muck removal, e.g. skip, reverse circulation, dredge pump, conveyor belt, pilot bore) the methods of applying thrust force and cutting torque to the drill bits (e.g. remote, local, part-face, full-face), the applicable geologies (e.g. soft ground, (hard) rock, (non-water bearing), the methods for temporarily supporting the rock surface (e.g. unsupported, inserted pile, rock anchors, shotcrete, geotextile, segmented lining), and whether a shaft is accessible during excavation or not. A well-known method to deliver tubular foundations is pile boring using the reverse circulation drilling method. Typical applications include (offshore) wind turbine monopile, sea-outfall risers, bridge foundations and mine access and ventilation shafts. A known optional method within this method is to use a drilling head with the possibility to activate under-reamers to produce enlarged sections of the drilled hole. One known configuration is, where under-reamer arms are actuated either pneumatically or hydraulically to increase the drilling head diameter up to about 60%, of between about 5 meters and about 8 meters. Under-reamers are used for foundation pile relief drilling, profiled holes for keying grout into ribbed rock socket foundations, foundation belling, or drilling to pile outside diameter and beyond for removal of hard layers to enable further penetration of a refused pile. Also, large diameter reaming of pilot bore tunnels using fixed diameter reaming cutter heads are known for horizontal tunneling applications. Other large diameter reaming methods include combinations of pilot-hole drilling and subsequent reaming by drill and blast, for example using shaft sinking jumbo. In the embodiments of FIG 1 and 2, a diameter expandable boring machine and methods excavate a wedge shape recess outside the shaft diameter for fixing a vertical pressure plug. This can be executed by known techniques. In the embodiments of FIG 3, 4, and 5 the section of the pressure holding cavity is excavated and reamed to a wider diameter by a diameter expandable boring machine and methods in one or multiple incremental steps, or by drill and blast methods. The current invention extends beyond prior art in that reamed sections of much larger diameter and length are achieved by deploying a novel expandable drilling head, and a method of reaming at incrementally increased diameter until the required diameter and hemispherical shapes are obtained. FIG 8C to F illustrate this sequence. The current invention is also new in that a raise-boring action is applied to a blind hole. Advantages of the current invention include safety, as the shaft is not accessed during excavation, and drilling fluid supports the rock surface. The previous section described disadvantages of drill and blast methods. The novel shaft drilling and reaming drilling installation and methods are described hereafter. **FIG 10** shows a 2-dimensional line-diagram of the working principle of a novel rotating drilling head with large diameter extension for several peripheral rock-cutting elements in rock. The drilling head is used in raise boring mode connected to a raise-drilling rig after a pilot shaft has been drilled. **FIG 11** shows the same drilling head of FIG 10 in a 3-dimensional representation for clarification purposes. To obtain a reasonably light and cost effective yet solid structure, the force-paths of the cutting forces are transferred by triangular structures that optimally use the available space in the 3-dimensional volume. The cutting forces in radial direction are opposite and absorbed locally in self-reacting manner. The excavation face in sinking and raising mode is a slender ring shape in the horizontal plain. The cutting face may be tilted to the horizontal, to facilitate guidance of drilling direction, activation of cutting forces in radial direction and material transport. The cutting face is formed by the frustum of truncated cone between apex (original diameter) and base (reamed diameter). An advantage of this embodiment is that the number of actuators as well as their size is smaller. Moreover, the actuators that are used are installed in the central, more protected parts of the installation. Another advantage in relation to other techniques of shaft drilling is that the installation can be easily removed from the shaft for inspection, repair and maintenance. The function of transport of excavated material is separated from the drill head during reaming operations. The excavated material falls down into a bilge from where it is pumped by airlift or dredge pump to the surface through the drill string. FIG 8D to F show the principle of separated muck removal. In FIG 10, **48** represents the drill string that is connected to the surface based raise drilling-rig (not shown). The drill string applies both torque and pulling forces to the drilling head. Also, excavated material is transported from the bilge, through the drill string to the surface. Cutter arms **49** can be expanded to the required diameter and each carry a limited number of cutting tools **54** in the reaming periphery. The combined tracks of all cutting arms cover the complete drilling face of the reaming stroke. Torque support structure **50** supports the cutter arms and transmits the torque from the drill string as well as part of the cutting loads. Actuator support structure **51** supports the actuators **52** and transmits cutting loads. The actuators my incorporate small stroke actuators themselves, in order to facilitate cutting force control and directional control of the drilling head. By turning the actuator support structure relative to the torque support structure, the cutter arms expand, and the diameter of the drilling head increases to the required diameter. In fully retracted position, the cutter arms are supported and fixed to the base support structure **53,** which has no function during reaming operations.

In FIG 12, an excavation sequence based on the principles of the novel drilling head with variable diameter is illustrated. The initial shaft is drilled in shaft drilling mode using drill string stabilizing elements **55.** A raise drill rig **56** is used for the subsequent reaming steps. After falling down into the bilge **21,** excavated material is removed by material transport practise such as dredge pumping or reverse circulation **57.** To excavate the bottom spherical shape of the pressure cavity in the last step, the drilling head may be turned.

WO 2011/139572 relates to an underground gaseous storage system comprising tubes inserted below the surface of the ground for the storage of gases. The system may be used to store gaseous hydrogen or other gases such as compressed natural gas.

The invention also relates to the following installations. **1.** An installation for storage of compressed air or gas adjacent a rock wall, said installation created in a blind hole by mechanized excavation methods such as shaft-boring machines. **2.** An installation according to clause 1, where the wedge shape recess section for a vertical pressure plug, and/or the section of the pressure holding cavity is excavated and reamed to a wider diameter by a diameter expandable boring machine and methods in one or multiple incremental steps, or by drill and blast methods. **3.** An installation according to clause 1 or 2, further comprising a flexible impermeable lining element, to which are allocated the functional requirements of air tightness and pressure load-transfer into the rock mass. **4.** An installation according to any one of the preceding clauses, comprising a flexible impermeable lining element directly adjacent to but not fixed with the rock surface, to facilitate inspection and replacement procedures and to allow for groundwater to enter the cavity into a dewatering bilge for certain system states and modes. **5.** An installation according to any one of the preceding clauses, further comprising a central column throughout the storage volume, to mitigate the need for a vertical pressure plug, to house auxiliary support systems and functions and to facilitate maintenance methods of the impermeable flexible lining element. **6.** An installation according to any one of the preceding clauses, further incorporating installations, systems and procedures for the replacement of the flexible impermeable liner. **7.** An installation according to any one of the preceding clauses, where a vertical pressure plug is created by means of installing a pre-fabricated core body housing all support systems, which is then bonded with the rock-mass in form-closed manner by in-situ casting of a torus shaped wedge volume, which is in part formed by a wedge shaped recess excavated into the rock. **8.** An installation according to any one of the preceding clauses, integrated with the foundation systems and structures of a monopile of an onshore or offshore wind turbine. **9.** An installation according to any one of the preceding clauses, where the boring machine incorporates a linkage configuration to extend a number of cutters in the outer drilling head perimeter to larger cutting diameters. **10.** An installation according to any one of the preceding clauses, where the boring machine excavates the pressure holding cavity section by reaming a pilot shaft to a wider diameter by using a diameter expandable drilling head in one or multiple incremental steps until the required diameter and hemispherical shape of the blind shaft are obtained. **11.** An installation according to any one of the preceding clauses, where the boring machine applies both shaft drilling and raise-boring methods to a blind hole. **12.** An installation according to any one of the preceding clauses, where the boring machine incorporates a rotating drilling head with rock cutting elements, and where diameter expansion is achieved by actuation of a single machine structural element. **13.** An installation according to any one of the preceding clauses, where the drilling head is configured such that the force-paths of the cutting forces are transferred by structures that optimally use the available space in the 3-dimensional volume, and where the cutting forces in radial direction are opposite and absorbed in self-reacting manner. **14** An installation according to any one of the preceding clauses, where the drilling head incorporates machine elements for control of cutting forces and directional control of the raise drilling head in reaming mode. **15.** An installation according to any one of the preceding clauses, where the transport of excavated material is allocated to a bilge and pumping system, separately from the boring machine elements for excavation.

The invention is not restricted to the above-described embodiments, which can be varied in a number of ways within the scope of the claims.

## Claims

1. An installation for storage of a compressed gas, such as air, comprising a cavity for containing the compressed gas, wherein the cavity comprises an excavated blind hole in rock.

2. An installation according to claim 1, wherein the blind hole was obtained by shaft-sinking, preferably obtained by raise drilling.

3. An installation according to claim 1 or 2, containing a compressed gas and wherein the containment forces are borne by and/or transferred to the rock.

4. An installation according to any one of the preceding claims, wherein the cavity comprises a lower section for storage of a compressed gas and an upper section and wherein the lower section has a larger diameter than the upper section, preferably at least 40%, preferably at least 70%, preferably at least 100% larger.

5. An installation according to any one of the preceding claims, further comprising a flexible impermeable lining, which, once inflated with compressed gas, abuts the wall of the cavity.

6. An installation according to any one of the preceding claims, comprising, above the cavity, an undercut and a pressure plug placed or formed in the undercut and/or comprising a column extending from the bottom to the top of the wider section.

7. A drilling machine or installation according to any one of the preceding claims comprising a drilling machine in turn comprising a drilling head, wherein the drilling head comprises one or more cutters and a linkage configuration to extend the one or more cutters in the outer drilling head perimeter to larger cutting diameters.

8. A drilling machine or installation according to any one of the preceding claims comprising a drilling machine, wherein the drilling machine incorporates a rotating drilling head with rock cutting elements, wherein diameter expansion of at least two cutting elements is achieved by actuation of a single actuator, preferably by rotating the actuator about or translating the actuator along the central machine axis.

9. A drilling machine or installation according to any one of the preceding claims comprising a drilling machine, wherein the drilling head is configured such that the cutting forces in radial direction are opposite and absorbed in self-reacting manner.

10. Method of building an installation for storage of a compressed gas, such as air, comprising the step of excavating from ground level downwards a blind hole in rock and comprising a cavity for containing the compressed gas.

11. Method according to claim 10, comprising the steps of excavating a blind shaft and reaming, e.g. by means of raise drilling or by drill and blast, a section of the shaft to a wider diameter in one step or a plurality of incremental steps, preferably using a diameter expandable drilling head in a plurality of incremental steps, to a pre-determined diameter and preferably comprising the steps of reaming domes at the top and/or bottom of the wider section.

12. Method according to claim 11, wherein the shaft drilling and the reaming of a section of the shaft are performed by means of the same drill.

13. Method according to any one of claims 10-12, comprising the steps of reaming, above the cavity for containing the compressed gas, an undercut and installing in the undercut a pressure plug, preferably by placing a pre-fabricated plug or by forming a plug in situ, and/or the step of placing in the cavity a column extending from the bottom to the top of the wider section.

14. Method according to any one of claims 10-13, wherein during reaming the excavated material falls in a bilge, e.g. at or in de bottom of the section being reamed, and is transported from there to ground level, e.g. by means of a pump located in the bilge, reverse circulation or other method

15. Method according to any one of claims 10-14, wherein a flexible lining is placed in at least the wider section and the lining is inflated and thus urged to the wall of the wider section.
